# EUROPÄISCHE PATENTSCHRIFT

(11) **EP 3 218 140 B1**
(45) Veröffentlichungstag und Bekanntmachung des Hinweises auf die Patenterteilung: **17.04.2019**
(21) Anmeldenummer: 15805121.9
(22) Anmeldetag: 12.11.2015
(51) Int. Cl.: B23K 20/12, B23K 9/08

(54) **PRESSSCHWEISSVORRICHTUNG UND PRESSSCHWEISSVERFAHREN**
PRESSURE WELDING DEVICE AND PRESSURE WELDING METHOD
DISPOSITIF ET PROCÉDÉ DE SOUDAGE PAR PRESSION

(30) Priorität: 12.11.2014 DE 202014105433 U
(43) Veröffentlichungstag der Anmeldung: 20.09.2017
(73) Patentinhaber: KUKA Industries GmbH, 86165 Augsburg (DE)
(72) Erfinder: BÜCHLER, Michael, 86179 Augsburg (DE); FISCHER, Otmar, 86150 Augsburg (DE)
(74) Vertreter: Ernicke, Klaus Stefan
(86) Internationale Anmeldenummer: PCT/EP2015/076464
(87) Internationale Veröffentlichungsnummer: WO 2016/075252

(56) Entgegenhaltungen:
- DE-U1- 29 606 504
- DE-U1-202004 010 386
- US-A1- 2013 221 070

## Beschreibung

Die Erfindung betrifft eine Pressschweißvorrichtung und ein Pressschweißverfahren mit den Merkmalen im Oberbegriff des Verfahrens- und Vorrichtungshauptanspruchs.

Eine solche Pressschweißvorrichtung ist aus der DE 91 15 951 U1 bekannt. Sie weist einen Maschinenkopf mit einer rotierenden Spindel und einer Bauteilaufnahme für das zu verschweißende Bauteil sowie einen Spindelantrieb und eine Betätigungseinrichtung mit einem Betätigungsantrieb für die Bauteilaufnahme auf. Die Spindel ist als hohle Motorwelle des Spindelantriebs ausgebildet und trägt einen Teil der Motorwicklung. Der Betätigungsantrieb für die Bauteilaufnahme ist am rückwärtigen Ende der Spindel bzw. Motorwelle angeordnet, welches nach hinten aus dem Motorgehäuse ragt.

EP2650075 betrifft eine Reibschweißmaschine mit Spindel.

Es ist Aufgabe der vorliegenden Erfindung, eine verbesserte Pressschweißtechnik aufzuzeigen.

Die Erfindung löst diese Aufgabe mit den Merkmalen im Verfahrens- und Vorrichtungshauptanspruch.

Die beanspruchte Pressschweißtechnik, d.h. die Pressschweißvorrichtung und das Pressschweißverfahren, haben verschiedene Vorteile. Sie bieten einerseits eine Steigerung der Leistungsfähigkeit und der Prozessqualität beim Pressschweißen. Andererseits kann der Automatisierungsgrad und damit auch die Wirtschaftlichkeit verbessert werden. Rüst- und Stillstandszeiten können weitgehend vermieden oder zumindest reduziert werden. Zudem wird die Ergonomie verbessert.

Die beanspruchte Betätigungseinrichtung, insbesondere deren Betätigungsantrieb, kann mit axialer Distanz von der Bauteilaufnahme am Spindelende oder Spindelkopf angeordnet sein. Die Bauteilaufnahme, insbesondere deren Spanneinrichtung, kann dadurch einfacher, kompakter und gewichtsärmer ausgebildet sein. Die Spanneinrichtung kann einstufig oder mehrstufig ausgeführt werden. Sie kann außerdem als kostengünstiges Spannfutter mit radialen backenförmigen Spannelementen, insbesondere als Vorderendfutter, ausgeführt sein.

Das mitdrehende Antriebsgehäuse kann das vom Spindelantrieb eingeleitete Antriebsmoment weitestgehend verformungsfrei übertragen. Dies ist für die exakte Steuerung und Positionierung der Spindel und des aufgenommenen Werkstücks von besonderem Vorteil. Zudem lassen sich auch sehr hohe Antriebsmomente übertragen. Die Torsionssteifigkeit des Antriebsstrangs wird verbessert und die Massenträgheit im Antriebsstrang reduziert.

Die beanspruchte Betätigungseinrichtung kann mittels einer Messeinrichtung für den Betätigungs- oder Stellhub exakt gesteuert oder geregelt werden. Ferner kann über die Messeinrichtung die Betriebsstellung der Spanneinrichtung zuverlässig detektiert werden. Die Betätigungseinrichtung baut sehr klein und kompakt. Dies ermöglicht eine kurze, torsionsgünstige Länge des Antriebsstrangs. Die leichtgewichtig Betätigungseinrichtung kann für stationäre und instationäre Maschinenköpfe eingesetzt und ggf. mitbewegt werden.

Die beanspruchte Betätigungseinrichtung bietet auch Vorteile für die Ausbildung und Anordnung des Spindelantriebs. Durch die Trennung der Betätigungseinrichtung vom Antriebsmotor kann dieser in beliebiger Weise ausgebildet sein. Dies ermöglicht den Einsatz von kostengünstigen Standardmotoren.

Besonders günstig ist eine Ausbildung des Spindelantriebs als Direktantrieb, wobei der Antriebsmotor mit dem Antriebsstrang und der Maschinenachse fluchten kann. Der Direktantrieb spart das in vielen Fällen bisher übliche Vorgelege mit einem Riementrieb ein. Die Einleitung von Querkräften auf den Antriebsstrang kann vermieden werden. Die Verschleißanfälligkeit wird deutlich gemindert.

Außerdem können im Antriebsstrang weitere Komponenten untergebracht werden, z.B. eine Lammellenbremse, eine Drehkupplung zum Ausgleich von Fluchtungsfehlern, eine Messvorrichtung für Momente sowie ggf. Drehzahlen und dgl., was bei der DE 91 15 951 U1 und anderen konventionellen Pressschweißvorrichtungen nicht möglich war. Zudem kann eine Massenentkopplung zwischen dem Spindelantrieb und einem im Prozess axial vorgeschobenen Maschinenkopf implementiert werden.

Ferner ist es möglich, den Antriebsmotor mit einer Schwungscheibenanordnung zu kombinieren, die vom Maschinenkopf aus gesehen hinter dem Antriebsmotor sitzen kann. Der Spindelantrieb kann zudem wahlweise stationär oder schwimmend bzw. in Richtung der Maschinenachse verfahrbar am Maschinengestell angeordnet sein. Durch die beanspruchte Betätigungseinrichtung ergibt sich eine wesentlich größere Bandbreite und Gestaltungsfreiheit für den Spindelantrieb. Dies ermöglicht außerdem eine Anpassung an unterschiedliche Maschinen- und Betriebs- oder Prozesserfordernisse.

Die beanspruchte Betätigungseinrichtung hat außerdem Vorteile für die Betriebsmittelzuführung. Hierfür kann eine Drehzuführung vorgesehen sein, die an das oder die jeweiligen Betriebsmittel angepasst werden kann. Die Drehzuführung baut sehr kompakt und hat Vorteile für die Lecköl-Rückführung. Sie kann ebenfalls zwischen dem Spindelantrieb und dem Maschinenstock angeordnet sein. Dies hat außerdem den Vorteil einer guten Zugänglichkeit für Montage-, Inspektions- und Wartungszwecke.

Die Pressschweißvorrichtung kann in unterschiedlicher Weise ausgebildet sein. Sie kann z.B. als Reibschweißvorrichtung ausgeführt sein. Die Bauteile werden dabei vorzugsweise längs der Maschinenachse ausgerichtet und an ihren einander zugekehrten Stirnrändern durch Reiben plastifiziert und durch anschließendes axiales Stauchen miteinander verbunden. Alternativ ist ein Pressschweißen mit einem umlaufend bewegten Lichtbogen möglich. Der Lichtbogenumlauf kann hierbei durch eine Treibeinrichtung gesteuert werden. Eine solche Pressschweißvorrichtung kann ebenfalls eine drehbare Bauteilaufnahme am Maschinenkopf aufweisen.

Die beanspruchte Betätigungseinrichtung hat außerdem Vorteile für die Anordnung und Funktion weiterer Komponenten der Pressschweißvorrichtung.

Eine Stelleinrichtung erlaubt eine einfache und schnelle Anpassung der Pressschweißvorrichtung an unterschiedliche Bauteilmaße, insbesondere Bauteillängen. Diese Anpassung betrifft insbesondere die zwischen Maschinenkopf und Stauchkopf schwimmfähig angeordnete Bauteilaufnahme. Sie kann automatisch erfolgen.

Mit der Stelleinrichtung wird eine Optimierung des Pressschweißprozesses und eine optimale Kontaktierung der zu verschweißenden Bauteile und des Stauchkopfes erreicht. Dies ist auch für die Optimierung der Prozessabläufe, insbesondere eine programmierte Steuerung der Plastifizierungs- und Stauchphasen sowie der dabei eintretenden Vorschübe und Bauteilverkürzungen von Vorteil. Dadurch können Schweißteile mit sehr hoher Qualität hergestellt werden. Dies betrifft einerseits die Qualität der Schweißverbindung und andererseits die gleichbleibende Länge der Schweißteile.

Im Rahmen eines eigenständigen Erfindungsgedankens ist ferner die Staucheinrichtung mit einem zwischen dem Maschinenkopf und dem Stauchkopf angeordneten und auf Zug wirkenden Stauchantrieb modifiziert. Dieser weist zwei oder mehr parallele Antriebseinheiten, z.B. Zylinder, auf, die längs und beidseitig neben der Maschinenachse angeordnet sind. Vorzugsweise sind die Zylindergehäuse am bevorzugt stationären Maschinenkopf abgestützt und die ausfahrbahren Kolbenstangen an ihrem freien Ende mit dem Stauchkopf fest verbunden. Die Stauchkräfte werden hierdurch in knickgünstiger Weise als Zugkräfte und nicht mehr als Druckkräfte wie beim Stand der Technik übertragen.

Die beanspruchte Ausbildung und Anordnung des Stauchantriebs erlaubt außerdem einen Kraftfluss in einem geschlossenen Kreis und zwischen dem Maschinenkopf und dem Stauchkopf, was für eine verbesserte Kraftabstützung sorgt und unerwünschte Verformungen vermeidet sowie das Maschinengestell entlastet. Durch die unterschiedlichen Höhenlagen der Zylinder, insbesondere ihrer Kolbenstangen, kann die Ergonomie und die Zugänglichkeit am Bedienbereich bzw. an der Bedienseite der Pressschweißvorrichtung verbessert werden. Zudem kann die schwimmend gelagerte Bauteilaufnahme zusätzlich an den Kolbenstangen über Gleitlager geführt werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Pressschweißvorrichtung in einer teilweise geschnittenen Seitenansicht,
- Figur 2:: eine Betätigungseinrichtung der Pressschweißvorrichtung von Figur 1 in perspektivischer Ansicht,
- Figur 3:: einen Längsschnitt durch eine erste Variante der Betätigungseinrichtung,
- Figur 4:: eine teilweise aufgebrochene Seitenansicht einer zweiten Variante der Betätigungseinrichtung,
- Figur 5:: einen abgebrochenen und vergrößerten Längsschnitt der zweiten Variante,
- Figur 6:: eine ausschnittsweise perspektivische Ansicht der Pressschweißvorrichtung von Figur 1 und
- Figur 7:: eine Variante der Pressschweißvorrichtung von Figur 1 in einer Seitenansicht.

Die Erfindung betrifft eine Pressschweißvorrichtung (1) und ein Pressschweißverfahren.

Die Pressschweißvorrichtung (1) und das Pressschweißverfahren können unterschiedlich ausgebildet sein. Gemeinsam ist den verschiedenen Varianten eine Plastifizierungseinrichtung (7) und eine Staucheinrichtung (8), mit der die zu verschweißenden Bauteile (2,3) an den einander zugekehrten Seiten oder Rändern aufgeschmolzen oder erweicht und anschließend unter Bildung des Schweißteils (5) gestaucht werden. Die Staucheinrichtung (8) weist hierfür einen Stauchantrieb (22) und einen Stauchkopf (27) auf, der mit einem Stauchanschlag (28) auf ein Bauteil (3) wirkt.

Die Pressschweißvorrichtung (1) weist ferner eine Maschinen- und Prozesssteuerung (nicht dargestellt) auf, die mit den nachfolgend beschriebenen Maschinenkomponenten verbunden ist und diese steuert. Die Maschinen- und Prozesssteuerung ist außerdem mit den nachgenannten Erfassungs-, Detektions- oder Messeinrichtungen verbunden und verarbeitet deren Signale. Sie kann speicherprogrammierbar ausgebildet sein und ein oder mehrere Prozess- oder Ablaufprogramme, eine Technologiedatenbank, Datenspeicher für Programme und aufgenommene Prozessdaten, eine Qualitätsüberwachung nebst Protokollierung oder dgl. beinhalten.

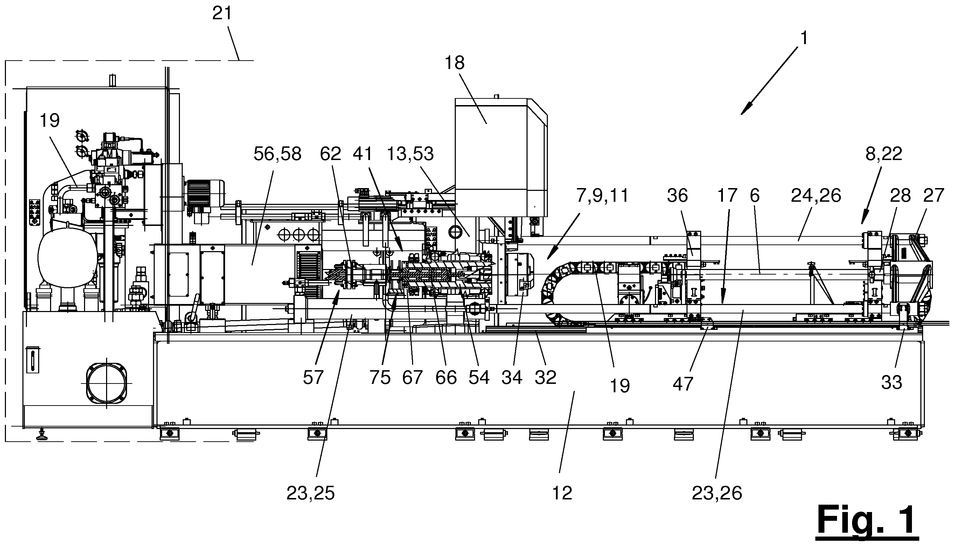

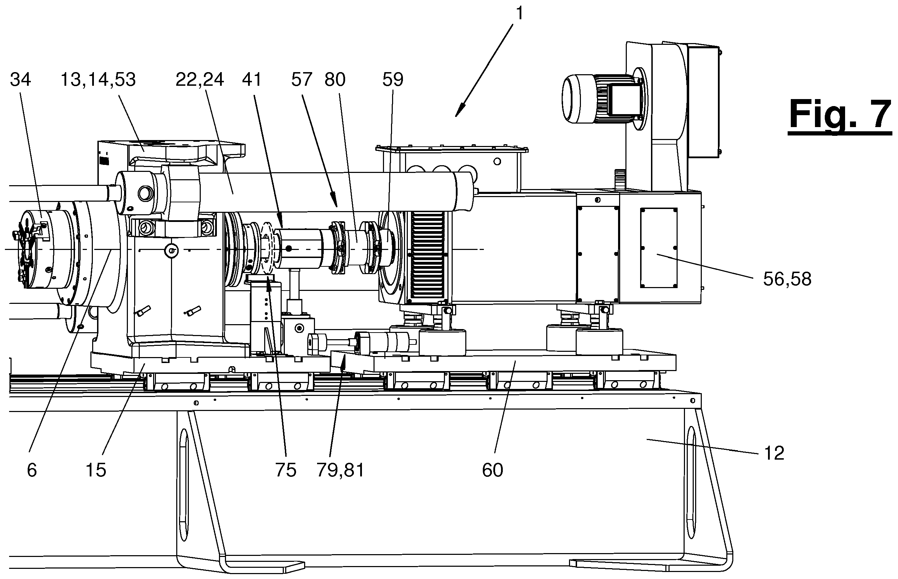

Die Plastifizierungseinrichtung (7) und das Plastifizierungsverfahren können unterschiedlich ausgebildet sein. Bei der in Figur 1 und 7 gezeigten Ausführungsform ist die Pressscheißvorrichtung (1) als Reibschweißvorrichtung ausgebildet, wobei die Plastifizierungseinrichtung (7) eine Reibeinrichtung (9) aufweist.

In einer nicht dargestellten Variante kann die Plastifizierungseinrichtung (7) eine Lichtbogeneinrichtung aufweisen, welche die Bauteilränder mit einem Lichtbogen erwärmt und angeschmilzt, wobei der Lichtbogen mittels einer Treibeinrichtung entlang des Bauteilumfangs umlaufend mit Magnetkraft bewegt wird.

Die Pressschweißvorrichtung (1) weist in den verschiedenen Varianten jeweils ein Maschinengestell (12) mit einer Längs- oder Maschinenachse (6) und eine Halterung (11) mit Bauteilaufnahmen (34,36) für die zu verschweißenden Bauteile (2,3) auf. Das Maschinengestell (12) hat ein flurgebundenes Maschinenbett, auf dem nachfolgend erläuterten Komponenten der Pressschweißvorrichtung (1) angeordnet sind. Ferner ist eine Betriebsmittelversorgung (19) vorhanden. Sie stellt die benötigten Betriebsmittel, insbesondere elektrischen Strom, Hydraulikflüssigkeit, Druckluft, Schmier- und Kühlmittel oder dgl. zur Verfügung und leitet sie zu den jeweiligen Verbrauchern.

Die Pressschweißvorrichtung (1) hat ein umgebendes schützendes Gehäuse (21) mit einem verschließbaren Zugang an der Bedienseite (20). Hier kann ein Werker, ein Roboter oder dgl. die zu fügenden Bauteile (2,3) zuführen und das fertige Schweißteil (5) abführen.

Das Pressschweißen der Bauteile (2,3) erfolgt in Richtung der Maschinenachse (6), entlang der auch die Bauteile (2,3) ausgerichtet sind. Die Bauteile (2,3) werden dabei an den einander zugekehrten Stirnseiten oder Rändern plastifiziert, insbesondere durch rotierendes Reiben oder durch den umlaufenden Lichtbogen (63), und entlang der Maschinenachse (6) gestaucht.

Die Bauteile (2,3) können aus unterschiedlichen Werkstoffen bestehen. Vorzugsweise kommen metallische Werkstoffe, insbesondere Stahl, Leichtmetalllegierungen, Gusslegierungen oder dergleichen zum Einsatz. Die Werkstoffpaarungen können unterschiedlich sein. Hierbei können insbesondere eisenhaltige Werkstoffe mit Nichteisenmetallen gefügt werden. Außerdem können nichtmetallische Werkstoffe, z.B. Keramikwerkstoffe geschweißt werden, insbesondere in Verbindung mit einem anderen metallischen Bauteil.

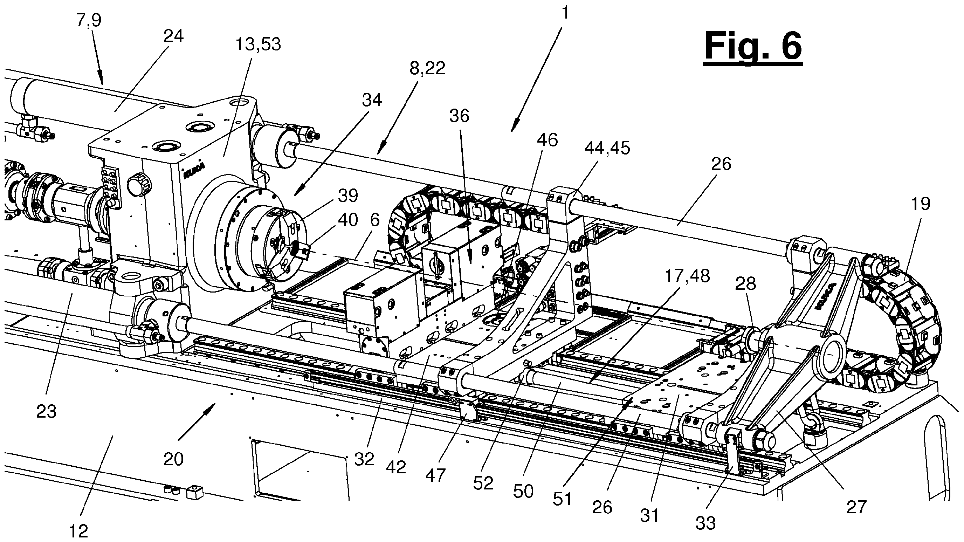

Die Pressschweißvorrichtung (1) besitzt ferner einen Maschinenkopf (13) mit einer Bauteilaufnahme (34) und dem besagten Stauchkopf (27), die längs der Maschinenachse (6) relativ zueinander beweglich gelagert sind und durch den Stauchantrieb (22) bewegt werden. In den gezeigten Ausführungsbeispielen von Figur 1 bis 6 ist ein einzelner Maschinenkopf (13) vorhanden, der stationär am Maschinengestell (12) angeordnet und abgestützt ist, wobei der Stauchkopf (27) am Maschinengestell (12) längs der Maschinenachse (6) verfahrbar angeordnet ist.

Die Kinematik kann alternativ umgedreht sein, wobei der Maschinenkopf (13) verfahrbar und der Stauchkopf (27) stationär angeordnet ist. In einer weiteren Variante können beide verfahrbar sein. Figur 7 zeigt eine Variante mit einem bewegbaren, insbesondere verfahrbaren Maschinenkopf (13).

In den gezeigten Ausführungsbeispielen ist die Pressschweißvorrichtung (1) als Einkopfmaschine ausgebildet. Alternativ kann die Pressschweißvorrichtung (1) mehrere Maschinenköpfe besitzen, die einander in der Maschinenachse (6) gegenüberliegend angeordnet sind. Hierbei kann die Pressschweißvorrichtung (1) als Doppelkopfmaschine oder als doppelte Einkopfmaschine mit einem stationären Stauchkopf zwischen den Maschinenköpfen ausgebildet sein. Die in Figur 7 gezeigte Anordnung mit dem verfahrbaren Maschinenkopf (13) kann z.B. ein Bestandteil einer Doppelkopfmaschine oder doppelten Einkopfmaschine sein.

Die Reibeinrichtung (9) weist in den gezeigten Ausführungsbeispielen eine drehbare Welle (54), die nachfolgend als Spindel bezeichnet wird, eine frontseitig an der Spindel (54) angeordnete Bauteilaufnahme (34), einen Spindelstock und einen Spindelantrieb (56) auf. Der Spindelstock (53) beinhaltet die Lagerung, Führung und Abstützung der Spindel (54) und ist am Maschinenkopf (13) angeordnet und abgestützt. Im Antriebsstrang (57) zwischen Spindelantrieb (56) und Spindel (54) können weitere Komponenten angeordnet sein. Dies kann z.B. eine Bremse sein, die als hydraulische Lamellenbremse oder einfachere Motor-Haltebremse ausgebildet sein kann. Auch generatorisches Bremsen des Spindelantriebs (56) ist möglich.

Die vorgenannte Anordnung kann auch bei der besagten Variante der Plastifizierungseinrichtung (7) mit einer Lichtbogeneinrichtung vorhanden sein.

Die Pressschweißvorrichtung (1) weist eine Betätigungseinrichtung (41) für die Bauteilaufnahme (34) am Maschinenkopf (13) auf. Bei der gezeigten Ausführungsform besitzt die Bauteilaufnahme (34) eine Spannvorrichtung (39) mit ein oder mehreren Spannelementen (40). Die Betätigungseinrichtung (41) wirkt bevorzugt auf das oder die Spannelement(e) (40).

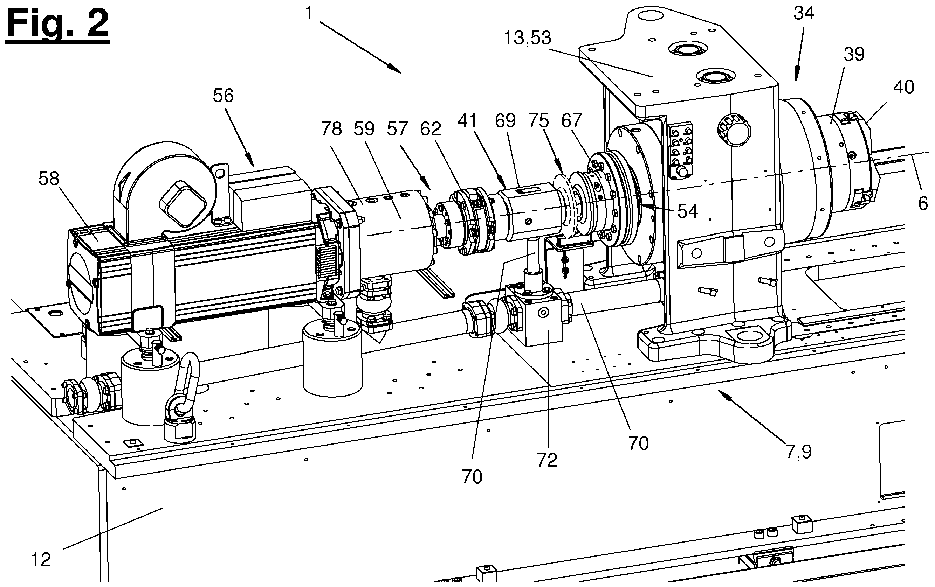

Die Betätigungseinrichtung (41) weist einen Betätigungsantrieb (65) auf, der zwischen dem Spindelantrieb (56) und der Spindel (54) im Antriebsstrang (57) angeordnet ist. Der Betätigungsantrieb (65) ist dabei vorzugsweise mitdrehend im Antriebsstrang (57) angeordnet. Figur 2 verdeutlicht diese Anordnung.

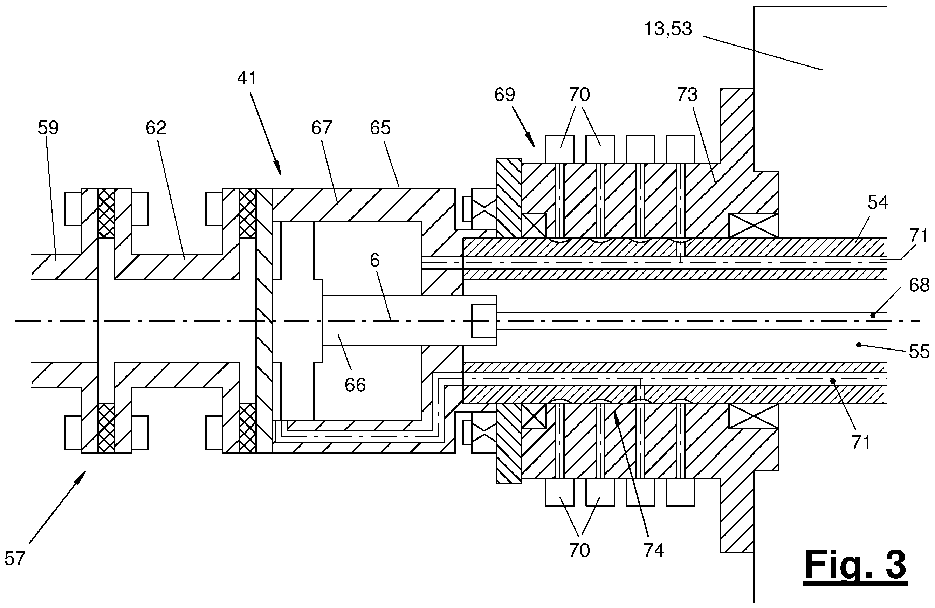

In Figur 3 bis 5 sind zwei Varianten der Betätigungseinrichtung (41) und des Betätigungsantriebs (65) dargestellt.

In beiden Varianten weist der Betätigungsantrieb (65) ein drehbares Antriebsgehäuse (67) auf, das einerseits mit dem Spindelantrieb (56), insbesondere dessen Antriebswelle (59), und andererseits mit der Spindel (54) drehfest verbunden ist und das Antriebsmoment überträgt. Das Antriebsgehäuse (67) kann mit der Antriebswelle (59) direkt oder indirekt unter Zwischenschaltung von weiteren Komponenten, z.B. einer Kupplung (62), verbunden sein.

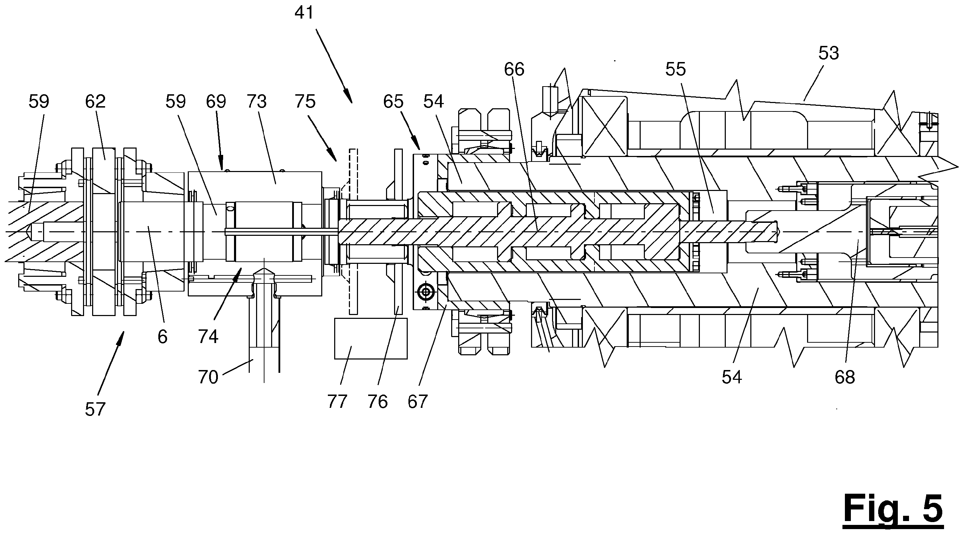

In den gezeigten Ausführungsformen ist das Antriebsgehäuse (67) mit der Abtriebsseite der Kupplung (62) verschraubt. Die Verbindung auf der anderen Seite mit der Spindel (54) kann auf beliebige Weise, z.B. durch eine Klemmverbindung erfolgen, wobei ein topfförmiger Gehäuseansatz auf das Spindelende mit axialem Anschlag gesteckt und radial festgeklemmt wird. Figur 3 und 5 zeigen diese Anordnung.

Die Spindel (54) ist vorzugsweise hohl ausgebildet, wobei in ihrem zentralen Innenraum (55) ein Betätigungselement (68), z.B. eine axial ausgerichtete Betätigungsstange, angeordnet ist. Das Betätigungselement (68) ist einerseits mit dem Betätigungsantrieb (65) und andererseits mit der Bauteilaufnahme (34) verbunden. Hierbei kann z.B. eine Verbindung mit der Spannvorrichtung (39) bzw. dem oder den Spannelement(en) (40) bestehen. Die Betätigung erfolgt z.B. durch eine axiale Schiebebewegung des Betätigungselements (68) in Richtung der Maschinenachse (6). Das Betätigungselement (68) sowie auch die weiteren Elemente des Betätigungsantriebs (65) können fluchtend oder konzentrisch zur Maschinenachse (6) angeordnet sein.

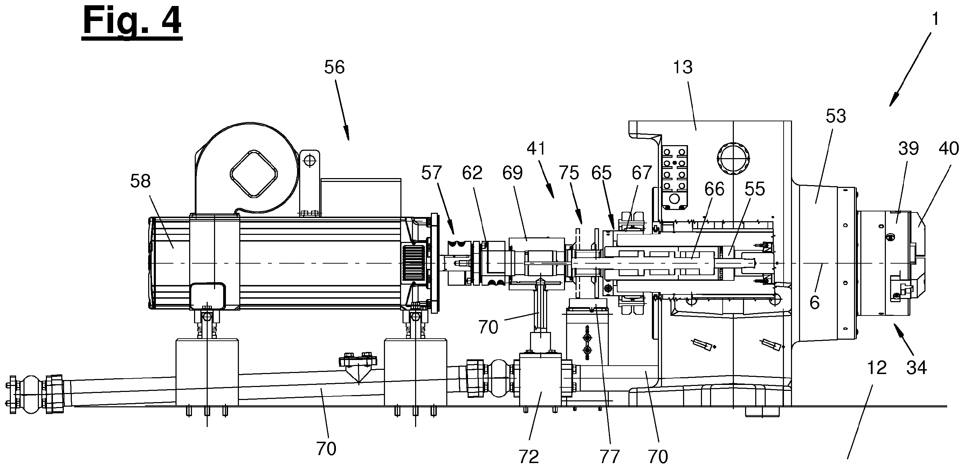

Der Betätigungsantrieb (65) kann in beliebig geeigneter Weise ausgebildet sein und weist ein Abtriebselement (66) auf. In den gezeigten Ausführungsbeispielen ist der Betätigungsantrieb (65) als hydraulischer Antrieb ausgebildet und besitzt ein als Kolbenanordnung gestaltetes Abtriebselement (66). Dieses ist mit dem Betätigungselement (68) verbunden. Die Kolbenanordnung (66) ist in der Variante von Figur 3 einstufig und in der anderen Variante von Figur 4 und 5 mehrstufig mit mehreren Kolben und Arbeitsräumen ausgebildet.

Alternativ kann der Betätigungsantrieb (65) in anderer Weise, z.B. als elektromotorischer Stellantrieb ausgebildet sein, wobei z.B. das Abtriebselement (66) als Ritzel und das Betätigungselement (68) als Treibstange, z.B. Zahnstange oder Gewindespindel ausgeführt ist.

In der Variante von Figur 3 sind das Antriebsgehäuse (67) und die Kolbenanordnung (66) im Wesentlichen außerhalb der Spindel (54) angeordnet, wobei lediglich die Kolbenstange ein Stück in den Hohlraum (55) ragt und dort mit dem Betätigungselement (68) verbunden ist. In der Variante von Figur 4 und 5 sind das Antriebsgehäuse (67) und das Abtriebselement (66), insbesondere die Kolbenanordnung, größtenteils im Innenraum (55) der hohlen Spindel (54) angeordnet. Das abgestufte Antriebsgehäuse (67) weist einen topfartigen Bund auf, der das Spindelende mit axialem Anschlag umgreift und mittels einer Spanneinrichtung gegen den Spindelmantel geklemmt wird. Diese Anordnung spart Platz und erleichtert auch die Betriebsmittelversorgung, insbesondere mit Hydraulikflüssigkeit.

Solche teilintegrierte Anordnungen von Antriebsgehäuse (67) und Abtriebselement (66) in der hohlen Spindel (54) sind auch bei anderen Varianten des Betätigungsantriebs (65) möglich.

Der Betätigungshub der Betätigungseinrichtung (41) kann mit einer Messeinrichtung (75) detektiert und gesteuert oder geregelt werden. Hierfür werden z.B. die Stellbewegung des Betätigungsantriebs (65) und des Abtriebselements (66) sowie des damit verbundenen Betätigungselements (68) detektiert und gesteuert oder geregelt. Die Messeinrichtung (75) ist mit der Maschinen- und Prozesssteuerung verbunden.

Die Messeinrichtung (75) weist ein bewegbares Messelement (76) und ein stationäres Messgerät (77) auf. Das Messelement (76) ist z.B. mit dem Abtriebselement (66) verbunden und wird von diesem axial in Richtung der Maschinenachse (6) bewegt. Es kann z.B. als ringförmige, dünnwandige Messscheibe ausgebildet sein. Das Messgerät (77) detektiert die Axialbewegung und -position des Messelement (76). Dies kann in beliebiger Weise, z.B. berührungslos und ggf. mittels einer induktiven, kapazitiven oder optischen Sensorik erfolgen. In den Zeichnungen sind die Betriebsstellung bei betätigter Spanneinrichtung (39) mit Volllinien und die zurückgezogene Ruhestellung bei gelöster Spanneinrichtung (39) gestrichelt dargestellt.

Die Betätigungseinrichtung (41) weist ferner eine Drehzuführung (69) für Betriebsmittel von außen zu dem mit der Spindel (54) drehenden Betätigungsantrieb (65) auf. Das oder die Betriebsmittel können z.B. Hydraulikflüssigkeit und/oder elektrischen Strom oder dgl. sein. Hierzu ist ein Anschluss für einen nicht dargestellten Schlauch oder ein Kabel an einem stationären Zuführgehäuse der Drehzuführung (69) angeordnet. Ferner sind externe Leitungen (70) für eine Leckölabfuhr sowie ein Anschlusskopf (72) vorgesehen, der zugleich eine Stützfunktion für die Drehzuführung (69) haben kann. Im Innenraum (55) oder im Mantel der Spindel (54) können interne Leitungen (71) zu dem ggf. in der Spindel (54) angeordneten Abtriebselement (66) verlegt sein.

In den verschiedenen Varianten von Figur 3 bis 5 weist die Drehzuführung (69) jeweils ein stationäres Zuführgehäuse (73) mit einem inneren rotierenden Ringverteiler (74) sowie eine interne Leitung (71) auf, welche mit dem Betätigungsantrieb (65) verbunden ist. Der Ringverteiler (74) und die ein- oder mehrfachvorhandene interne Leitung (71) sind an einer Welle angeordnet, die ebenfalls verformungsfrei das Antriebsmoment überträgt und entsprechend dimensioniert ist. Dies kann die Antriebswelle (59), die Spindel (54) oder eine zwischengeschaltete Welle sein.

Im Ausführungsbeispiel von Figur 3 ist der Ringverteiler zwischen Antriebsgehäuse (67) und Maschinenstock (13) angeordnet. Der Ringverteiler (74) weist umfangseitige Ringleitungen am Mantel der besagten Welle, z.B. der Spindel (54), auf. Die Ringleitungen sind jeweils zum einen mit einem radialen Stichkanal im Zuführgehäuse (73) und zum anderen mit einer internen axialen Leitung (71) im Mantel der Spindel (54) verbunden. Die internen Leitungen (71) setzen sich im Antriebsgehäuse (67) fort und münden an den Arbeitskammern der Kolbenanordnung (66) vor und hinter dem Kolben. Die internen Leitungen (71) sind als Zuführ- und Abführleitungen ausgebildet.

Bei der zweiten Variante von Figur 4 und 5 sind das Zuführgehäuse (73) und der Ringverteiler (74) zwischen dem Spindelantrieb (56) und dem Antriebsgehäuse (67) angeordnet. Der Ringverteiler (74) und seine Ringleitungen sind der Antriebswelle (59) umfangseitig zugeordnet, wobei die hier nur angedeuteten internen Leitungen (71) in der Antriebswelle (59) angeordnet sind.

Eine beiden Varianten entsprechende Anordnung kann auch bei einem elektrischen Betätigungsantrieb (65) vorhanden sein. Der Ringverteiler (74) ist dabei z.B. als Schleifringanordnung ausgebildet.

Am stationären Zuführgehäuse (73) ist außenseitig die erwähnte externe Leitung (70) für das Lecköl angeordnet, deren Leitungsstränge mit den vorerwähnten Stichleitungen im Ringverteiler (74) verbunden sind. Die bevorzugt vertikale externe Leitung (70) ist mit dem bevorzugt stationären Anschlusskopf (72) verbunden und kann dabei auch in eine Stützfunktion für das Zuführgehäuse (73) eingebunden sein. Diese Leitung (70) kann z.B. an oder in einer Pendelstütze zwischen Anschlusskopf (72) und Zuführgehäuse (73) angeordnet sein. Am Anschlusskopf (72) sind eine oder weitere externe Leitungen (70) angeordnet, die ihrerseits mit der Betriebsmittelversorgung (19) verbunden sind.

Der Anschlusskopf (72) ist in den Ausführungsbeispielen von Figur 1 und 2 stationär am Maschinengestell (12) angeordnet. Der Maschinenkopf (13) kann ebenfalls stationär angeordnet sein. In der Variante von Figur 7 ist der Maschinenkopf (13) längs der Maschinenachse (6) beweglich, insbesondere verfahrbar angeordnet. Er befindet sich z.B. auf einem Träger (15), insbesondere einem Schlitten, auf dem auch der Anschlusskopf (72) angeordnet sein kann und den Maschinenkopfbewegungen folgen kann.

Die Betriebsmittelversorgung (19) weist im Falle eines hydraulischen Betätigungsantriebs (65) ein Pumpaggregat und eine Ventilanordnung zur Versorgung und Beschaltung des hydraulischen Betätigungsantriebs (65) und seines Abtriebselements (66) auf. Bei einem elektrischen Betätigungsantrieb (65) ist entsprechend eine Stromquelle und eine Schalteinrichtung vorhanden.

Der Spindelantrieb (56) ist in der gezeigten Ausführungsform als Direktantrieb ausgebildet. Er weist einen z.B. elektrischen Antriebsmotor (58) auf, dessen Motorwelle (59) die Antriebswelle bildet und im Wesentlichen fluchtend zur Längsachse der Spindel (54) und zur Maschinenachse (6) ausgerichtet ist. Desgleichen ist auch der Antriebsstrang (57) längs der Maschinenachse (6) ausgerichtet. Die Antriebswelle (59), z.B. die Motorwelle, ist über die besagte Kupplung (62) mit der Betätigungseinrichtung (41) gekoppelt. Die Kupplung (62) ist drehfest und biegelastisch ausgebildet. Sie kann evtl. Fluchtungsfehler, insbesondere Seitenversatz und/oder Schrägstellung, ausgleichen.

Alternativ kann der Antriebsmotor (58) seitlich versetzt von der Spindel (54) sowie der Maschinenachse (6) angeordnet sein und über ein Vorgelege, insbesondere einen Riementrieb, die Spindel (54) antreiben. Ferner kann der Antriebsmotor (58) in anderer Weise, z.B. als Hydraulikmotor, ausgebildet sein.

In einer weiteren Abwandlung kann der Spindelantrieb (56) eine Schwungscheibenanordnung (nicht dargestellt) aufweisen. Die Schwungscheiben werden vom Antriebsmotor (58) in Rotation um die Maschinenachse (6) versetzt und bewirken dann einen Trägheitsantrieb für die Spindel (54), wobei eine steuerbare Bremse die Drehzahl im Antriebsstrang (57) steuern oder regeln und ggf. die Drehung auch stillsetzen kann. Mittels einer Kupplung kann die Schwungscheibenanordnung vom Antriebsmotor (58) und ggf. von der Spindel (54) getrennt werden.

Der Stauchkopf (27) ist z.B. jochartig ausgebildet und besitzt einen Träger (31) mit einer Stütze (29), an welcher der Stauchanschlag (28) angeordnet und der Stauchantrieb (22) angebunden ist. Der Träger (31) ist z.B. als Schlitten ausgebildet und ist auf dem Maschinenbett (12) über eine Führung (32) z.B. über beidseitige axiale Führungsschienen, geführt und gelagert. Der Stauchkopf (27) weist ferner eine Erfassungseinrichtung (33) für seine Position und den Fahrweg auf.

Die Halterung (11) für die Bauteile (2,3) weist außer der Bauteilaufnahme (34) Maschinenkopf (13) eine weitere Bauteilaufnahme (36) auf, die zwischen dem Maschinenkopf (13) und dem Stauchkopf (27) schwimmfähig am Maschinengestell (12) gelagert ist. Diese dient zur Aufnahme des zweiten Bauteils (3) und wird auch als Zentralaufnahme bezeichnet. Die Bauteil- oder Zentralaufnahme (36) besitzt ebenfalls einen Träger (42), insbesondere in Form eines Schlittens, der auf dem Maschinengestell (12) in Richtung der Maschinenachse (6) verfahrbar gelagert und geführt ist. Er kann dabei mit dem Stauchkopf (27) auf einer gemeinsamen Führung (32) hintereinander angeordnet sein.

Die Bauteilaufnahme (36) kann mittels einer steuerbaren Fixiereinrichtung (46) bedarfsweise am Maschinenbett (12), insbesondere an der Führung (32) durch Klemmung oder auf andere Weise fixiert werden. Die Bauteilaufnahme (36) weist ebenfalls eine Erfassungseinrichtung (47) für Position und/oder Weg entlang der Maschinenachse (6) auf. Die Erfassungseinrichtungen (33,47) können gleichartig ausgebildet sein und eine gemeinsame Messschiene nutzen.

Der Stauchkopf (27) wirkt mit dem Stauchanschlag (28) von hinten in Richtung der Maschinenachse (6) auf das Bauteil (3), wobei dies mittels eines direkten Anlagekontakts oder unter Zwischenschaltung einer Stauchstange geschehen kann.

Die Staucheinrichtung (8) wirkt in den gezeigten Ausführungsbeispielen zwischen dem Maschinenkopf (13) und dem Stauchkopf (27) und entwickelt Zugkräfte in Richtung der Maschinenachse (6). Die Staucheinrichtung (8) weist einen Stauchantrieb (22) auf, der zwischen dem Maschinenkopf (13) und dem Stauchkopf (27) angeordnet und mit beiden verbunden ist. Der Stauchantrieb (22) wirkt auf Zug und zieht die Komponenten (13,27) gegeneinander.

Der Stauchantrieb (22) kann in unterschiedlicher Weise ausgebildet sein. In den gezeigten Ausführungsbeispielen weist er zwei oder mehr parallele Antriebseinheiten (23,24) auf, die längs der Maschinenachse (6) ausgerichtet sind. Die Antriebseinheiten (23,24) sind an verschiedenen Seiten der Maschinenachse (6) angeordnet, insbesondere beidseits und einander diametral zur Maschinenachse (6) gegenüberliegen. Die Antriebseinheiten sind bevorzugt als Zylinder ausgebildet.

Die Antriebseinheiten (23,24) können alternativ in anderer Weise, z.B. als elektrische Stangen- oder Spindelantriebe, ausgebildet sein. Die nachfolgend zu den gezeigten Zylindern (23,24) erläuterten Anordnungen und Ausgestaltungen gelten entsprechend auch für andere Ausführungen von Antriebseinheiten.

Die Zylinder (23,24) sind auf unterschiedlichen Höhen über dem Maschinenbett (12) angeordnet. Der dem Bedienbereich bzw. der Bedienseite (20) benachbarte Zylinder (23) ist dabei tief und knapp über der Oberseite des Maschinenbetts (12) angeordnet.

Die Zylinder (23,24) sind vorzugsweise als hydraulische Zylinder ausgebildet. Sie weisen jeweils eine ausfahrbare Kolbenstange (26) und ein Zylindergehäuse (25) auf. Die Zylindergehäuse (25) sind bevorzugt am Maschinenkopf (13) montiert und abgestützt. Die freien Enden der Kolbenstangen (26) sind am Stauchkopf (27) befestigt. Bei anderen Antriebseinheiten können das Antriebsgehäuse (25) und das ausfahrbare Antriebselement (26), z.B. eine Zahnstange oder eine Gewindespindel, entsprechend angeordnet und verbunden sein.

In den Ausführungsbeispielen von Figur 1 und 2 kann die zentrale Bauteilaufnahme (36) ebenfalls mit dem Stauchantrieb (22), insbesondere mit den Kolbenstangen (26), verbunden werden. Auf dem Träger oder Schlitten (42) ist hierfür eine Stütze (44) befestigt, die über Gleitlager (45) mit den Kolbenstangen (26) verbunden ist.

In der Variante von Figur 7 bewegt der Stauchantrieb (22) den Maschinenkopf (13) relativ zu einem stationären und am Maschinengestell (12) abgestützten Stauch- oder Stützkopf (nicht dargestellt). Der Maschinenkopf (13) kann eine Erfassungseinrichtung für Weg und/oder Position aufweisen. Ferner kann eine Massenentkopplung (79) im Antriebsstrang (57) vorgesehen sein, die den Maschinenkopf (13) bei seinem Vorschub im Schweißprozess vom Spindelantrieb (56) in Axialrichtung (6) entkoppelt. Hierbei kann eine axialtolerante Kupplung (80), z.B. eine Schiebehülse, im Antriebsstrang (57) für die Aufrechterhaltung des drehenden Antriebs beim Vorschub des Maschinenkopfs (13) sorgen. Alternativ kann auch eine gegenseitige Distanzierung unter Aufhebung der Antriebsübertragung stattfinden.

Der Spindelantrieb (56) kann dabei ggf. auf einem schlittenartigen Antriebsträger (60) angeordnet und axial verfahrbar am Maschinengestell (12) gelagert und mit dem Maschinenkopf (13), insbesondere dessen Träger (15) über eine Koppeleinrichtung (81) lösbar verbunden sein. Der Spindelantrieb (56) kann ferner für die Massenentkopplung temporär am Maschinengestell (12) mittels einer Antriebsfixierung arretiert werden.

Die Pressschweißvorrichtung (1) weist in den verschiedenen Ausführungsformen jeweils eine Stelleinrichtung (17) zur Anpassung an unterschiedliche Bauteilmaße, insbesondere Bauteillängen, auf. Die Stelleinrichtung (17) funktioniert vorzugsweise automatisch. Die Anpassung erfolgt bei Figur 1 und 2 über eine Verstellung des Stauchkopfs (27) und bei Figur (7) über eine Verstellung des Maschinenkopfs (13).

Die Stelleinrichtung (17) weist eine steuerbare und längenveränderliche Koppeleinrichtung (48) zwischen der zentralen Bauteilaufnahme (36) und dem Stauchkopf (27) auf. Die Koppeleinrichtung (48) sorgt für eine Verbindung der Komponenten (36,27) in Richtung der Maschinenachse (6) und ist vorzugsweise mit deren Trägern (31,42) verbunden. Mit der Stelleinrichtung (17) und insbesondere deren Koppeleinrichtung (48) kann gemäß Figur 1 und 2 der Abstand zwischen der Bauteilaufnahme (36) und dem Stauchkopf (27) in Richtung der Maschinenachse (6) verändert und bedarfsweise angepasst werden.

Hierdurch ist einerseits eine Grobverstellung zur Anpassung an unterschiedliche Längenmaße verschiedener Bauteile (2,3) möglich. Außerdem können kleinere Änderungen der Bauteilmaße kompensiert werden. Solche Änderungen werden z.B. durch Einlegetoleranzen, Bauteiltoleranzen, insbesondere Längentoleranzen, eine elastische Verkürzung eines Bauteils (3) im Pressschweißprozess oder dgl. hervorgerufen.

Ferner kann im Antriebsstrang (57) zwischen dem Spindelantrieb (56) und der Spindel (54) eine Messeinrichtung (nicht dargestellt) mit einer Messwelle für die Erfassung des Antriebsmoments und ggf. der Antriebsdrehzahl angeordnet ist. Die Messeinrichtung kann zwischen die Motorwelle (59) und die Spindel (54) bzw. die Betätigungseinrichtung (41) geschaltet sein. Die Antriebs- oder Motorwelle kann geteilt ausgebildet sein, wobei die Messwelle zwischen die Wellenhälften eingesetzt ist. Alternativ kann die Antriebs- oder Motorwelle mit geeigneten Messelementen versehen sein und die Messwelle bilden.

In Figur 1 ist außerdem die Anordnung einer Bearbeitungseinrichtung (18) für das Schweißteil (5) oder für ein oder mehrere Bauteile (2,3) vor und/oder während des Schweißens dargestellt. Die Bearbeitungseinrichtung (18) ist z.B. als Abdreheinrichtung für den Schweißwulst am Schweißteil (5) ausgebildet. Sie kann außerdem die Stirnseiten von ein oder beiden Bauteilen (2,3) vor dem Schweißen plandrehen.

Für eine derartige Bearbeitung kann das Schweißteil (5) von der Bauteilaufnahme (34) bzw. vom Spindelantrieb (56) gedreht werden. In diesem Fall kann sich die Spanneinrichtung (39) der zentralen Bauteilaufnahme (36) öffnen. An der Bauteilaufnahme (36), insbesondere auf deren Träger (42), kann eine in Figur 5 schematisch dargestellte Bauteilabstützung (38) angeordnet sein, welche z.B. als Lünette mit Rollen ausgebildet ist und das drehende Schweißteil (5) abstützt.

Abwandlungen der gezeigten und beschriebenen Ausführungsbeispiele sind in verschiedener Weise möglich. Insbesondere können die Merkmale der verschiedenen Ausführungsbeispiele beliebig miteinander kombiniert und auch ausgetauscht werden. Der Stauchantrieb (22) kann in konventioneller Weise, z.B. gemäß des eingangs genannten Standes der Technik, ausgeführt sein. Der Stauchkopf (27) kann dabei entsprechend modifiziert sein.

### BEZUGSZEICHENLISTE

- 1: Pressschweißvorrichtung, Reibschweißvorrichtung
- 2: Bauteil
- 3: Bauteil
- 3':
- 4:
- 5:
- 5':
- 6: Längsachse, Maschinenachse
- 7: Plastifiziereinrichtung
- 8: Staucheinrichtung
- 9: Reibeinrichtung
- 10:
- 11: Halterung für Bauteile
- 12: Maschinengestell, Maschinenbett
- 13: Maschinenkopf
- 14:
- 15:
- 16:
- 17: Stelleinrichtung
- 18: Bearbeitungseinrichtung, Abdreheinrichtung
- 19: Betriebsmittelversorgung
- 20: Bedienbereich
- 21: Gehäuse
- 22: Stauchantrieb
- 23: Antriebseinheit, Zylinder
- 24: Antriebseinheit, Zylinder
- 25: Antriebsgehäuse, Zylindergehäuse
- 26: Antriebselement, Kolbenstange
- 27: Stauchkopf, Joch, Stützkopf
- 28: Stauchanschlag
- 29: Stütze
- 30:
- 31: Träger, Schlitten
- 32: Führung
- 33: Erfassungseinrichtung, Wegmesser

- 34: Bauteilaufnahme an Maschinenkopf
- 35:
- 36: Bauteilaufnahme, Zentralaufnahme
- 37:
- 38:
- 39: Spanneinrichtung, Spannfutter
- 40: Spannelement
- 41: Betätigungseinrichtung für Bauteilaufnahme
- 42:
- 43:
- 44: Stütze
- 45: Lager, Gleitlager
- 46: Fixiereinrichtung
- 47: Erfassungseinrichtung, Wegmesser
- 48: Koppeleinrichtung für Zentralaufnahme/Stauchkopf
- 49:
- 50:
- 51:
- 52:
- 53: Spindelstock
- 54: Spindel
- 55: Innenraum
- 56: Reibantrieb, Spindelantrieb
- 57: Antriebsstrang
- 58: Antriebsmotor, Direktantrieb
- 59: Welle, Motorwelle
- 60: Antriebsträger, Schlitten
- 61:
- 62: Kupplung, Drehkupplung
- 63:
- 64:
- 65: Betätigungsantrieb, Zylinder
- 66: Abtriebselement, Kolben, Spindel
- 67: Antriebsgehäuse
- 68: Betätigungselement, Betätigungsstange
- 69: Drehzuführung Betriebsmittel
- 70: Leitung, extern

- 71: Leitung, intern
- 72: Anschlusskopf
- 73: Zuführgehäuse
- 74: Ringverteiler
- 75: Messeinrichtung
- 76: Messelement, Messscheibe
- 77: Messgerät
- 78: Bremse, Lamellenbremse
- 79: Massenentkopplung
- 80: Kupplung in Antriebsstrang
- 81: Koppeleinrichtung
- 82:
- 83:
- 84:
- 85:
- 86:
- 87:
- 88:
- 89:
- 90:
- 91:

## Patentansprüche

1. Pressschweißvorrichtung mit einer Plastifizierungseinrichtung (7) und einer Staucheinrichtung (8), wobei die Pressschweißvorrichtung (1) einen Maschinenkopf (13) mit einer Spindel (54) und einer Bauteilaufnahme (34) sowie einen Spindelantrieb (56) und eine Betätigungseinrichtung (41) mit einem Betätigungsantrieb (65) für die Bauteilaufnahme (34) aufweist, **dadurch gekennzeichnet, dass** der Betätigungsantrieb (65) in einem Antriebsstrang (57) zwischen Spindelantrieb (56) und Spindel (54) angeordnet ist.

2. Pressschweißvorrichtung nach Anspruch 1, **dadurch gekennzeichnet, dass** der Betätigungsantrieb (65) im Antriebsstrang (57) mitdrehend angeordnet ist, wobei der Betätigungsantrieb (65) ein drehbares Antriebsgehäuse (67) aufweist, das einerseits mit dem Spindelantrieb (56), insbesondere dessen Antriebswelle (59), und andererseits mit der Spindel (54) drehfest verbunden ist und das Antriebsmoment überträgt.

3. Pressschweißvorrichtung nach Anspruch 1 oder 2, **dadurch gekennzeichnet, dass** die Betätigungseinrichtung (41) eine Messeinrichtung (75) für den Betätigungshub aufweist.

4. Pressschweißvorrichtung nach einem der vorhergehenden Ansprüche, **dadurch gekennzeichnet, dass** im Innenraum (55) der hohlen Spindel (54) ein mit dem Betätigungsantrieb (65) verbundenes Betätigungselement (68) für die Bauteilaufnahme (34) angeordnet ist, wobei bevorzugt die Betätigungseinrichtung (41), insbesondere das Betätigungselement (68), mit einer Spanneinrichtung (39) der Bauteilaufnahme (34) wirkverbunden ist.

5. Pressschweißvorrichtung nach einem der vorhergehenden Ansprüche, **dadurch gekennzeichnet, dass** der Betätigungsantrieb (65) als elektrischer oder hydraulischer Antrieb ausgebildet ist.

6. Pressschweißvorrichtung nach einem der vorhergehenden Ansprüche, **dadurch gekennzeichnet, dass** ein Abtriebselement (66) des Betätigungsantriebs (65) zumindest teilweise im Innenraum (55) der hohlen Spindel (54) angeordnet ist und bevorzugt als einstufige oder mehrstufige Kolbenanordnung ausgebildet ist.

7. Pressschweißvorrichtung nach einem der vorhergehenden Ansprüche, **dadurch gekennzeichnet, dass** die Betätigungseinrichtung (41) eine Drehzuführung (69) für Betriebsmittel, insbesondere Hydraulikflüssigkeit oder elektrischen Strom, zum mitdrehenden Betätigungsantrieb (65) aufweist.

8. Pressschweißvorrichtung nach einem der vorhergehenden Ansprüche, **dadurch gekennzeichnet, dass** die Pressschweißvorrichtung (1) einen Stauchkopf (27) aufweist und der Stauchkopf (27) und der zugeordnete Maschinenkopf (13,14) längs einer Maschinenachse (6) relativ zueinander beweglich sind, wobei zwischen ihnen eine Bauteilaufnahme (36) schwimmfähig am Maschinengestell (12) gelagert ist und die Pressschweißvorrichtung (1) eine bevorzugt automatische Stelleinrichtung (17) zur Anpassung an unterschiedliche Bauteilmaße, insbesondere Bauteillängen, aufweist.

9. Pressschweißvorrichtung nach einem der vorhergehenden Ansprüche, **dadurch gekennzeichnet, dass** die Pressschweißvorrichtung (1) als Reibschweißvorrichtung ausgebildet ist, wobei die Plastifizierungseinrichtung (7) eine Reibeinrichtung (9) aufweist oder die Pressschweißvorrichtung (1) als Schweißvorrichtung mit einem magnetisch bewegten Lichtbogen ausgebildet ist, wobei die Plastifizierungseinrichtung (7) eine Lichtbogeneinrichtung aufweist.

10. Verfahren zum Pressschweißen mittels einer Pressschweißvorrichtung (1), welche eine Plastifizierungseinrichtung (7) und eine Staucheinrichtung (8) sowie einen Maschinenkopf (13) mit einer Spindel (54) und einer Bauteilaufnahme (34) sowie einen Spindelantrieb (56) und eine Betätigungseinrichtung (41) mit einem Betätigungsantrieb (65) für die Bauteilaufnahme (34) aufweist, **dadurch gekennzeichnet, dass** die Bauteilaufnahme (34) von einem in einem Antriebsstrang (57) zwischen Spindelantrieb (56) und Spindel (54) angeordneten Betätigungsantrieb (65) betätigt wird.

11. Verfahren nach Anspruch 10, **dadurch gekennzeichnet, dass** die Bauteilaufnahme (34) von einem mit axialer Distanz von der Bauteilaufnahme (34) angeordneten Betätigungsantrieb (65) betätigt wird.

12. Verfahren nach Anspruch 10 oder 11, **dadurch gekennzeichnet, dass** die Betätigungseinrichtung (41) mittels einer Messeinrichtung (75) für den Betätigungs- oder Stellhub gesteuert oder geregelt wird.

13. Verfahren nach Anspruch 10, 11 oder 12, **dadurch gekennzeichnet, dass** mittels einer Messeinrichtung (75) für den Betätigungs- oder Stellhub die Betriebsstellung einer Spanneinrichtung (39) der Bauteilaufnahme (34) detektiert wird.

14. Verfahren nach einem der Ansprüche 10 bis 13, **dadurch gekennzeichnet, dass** dem mit der Spindel (54) drehenden Betätigungsantrieb (65) Betriebsmittel von außen mittels einer zwischen dem Spindelantrieb (56) und dem Maschinenstock (13) angeordneten Drehzuführung (69) zugeführt werden.

15. Verfahren nach einem der Ansprüche 10 bis 14, **dadurch gekennzeichnet, dass** die zu verschweißenden Bauteile (2,3) an ihren einander zugekehrten Stirnrändern durch Reibung oder durch einen umlaufend bewegten Lichtbogen plastifiziert werden.

## Claims

1. Pressure welding device with a plastifying unit (7) and a compressing unit (8), wherein the pressure welding device (1) has a machine head (13) with a spindle (54) and a component mount (34) and also a spindle drive (56) and an actuating unit (41) with an actuating drive (65) for the component mount (34), **characterized in that** the actuating drive (65) is arranged in a drive train (57) between the spindle drive (56) and the spindle (54).

2. Pressure welding device according to Claim 1, **characterized in that** the actuating drive (65) is arranged in the drive train (57) for conjoint rotation, wherein the actuating drive (65) has a rotatable drive housing (67), which is connected on the one hand to the spindle drive (56), in particular its drive shaft (59), and on the other hand to the spindle (54) for rotation therewith and transmits the drive torque.

3. Pressure welding device according to Claim 1 or 2, **characterized in that** the actuating unit (41) has a measuring unit (75) for the actuating stroke.

4. Pressure welding device according to one of the preceding claims, **characterized in that** an actuating element (68) for the component mount (34) that is connected to the actuating drive (65) is arranged in the interior space (55) of the hollow spindle (54), wherein the actuating unit (41), in particular the actuating element (68), is preferably operatively connected to a clamping unit (39) of the component mount (34).

5. Pressure welding device according to one of the preceding claims, **characterized in that** the actuating drive (65) is formed as an electric or hydraulic drive.

6. Pressure welding device according to one of the preceding claims, **characterized in that** a driven element (66) of the actuating drive (65) is arranged at least partially in the interior space (55) of the hollow spindle (54) and is preferably formed as a single-stage or multi-stage piston arrangement.

7. Pressure welding device according to one of the preceding claims, **characterized in that** the actuating unit (41) has a rotary feed (69) for operating media, in particular hydraulic fluid or electric current, to the co-rotating actuating drive (65).

8. Pressure welding device according to one of the preceding claims, **characterized in that** the pressure welding device (1) has a compressing head (27) and the compressing head (27) and the assigned machine head (13, 14) are movable in relation to one another along a machine axis (6), wherein a component mount (36) is mounted between them in a floating manner on the machine frame (12) and the pressure welding device (1) has a preferably automatic adjusting device (17) for adaptation to different component dimensions, in particular component lengths.

9. Pressure welding device according to one of the preceding claims, **characterized in that** the pressure welding device (1) is formed as a friction welding device, wherein the plastifying unit (7) has a friction unit (9) or the pressure welding device (1) is formed as a welding device with a magnetically impelled arc, wherein the plastifying unit (7) has an arcing unit.

10. Method for pressure welding by means of a pressure welding device (1), which has a plastifying unit (7) and a compressing unit (8) and also a machine head (13) with a spindle (54) and a component mount (34) and also a spindle drive (56) and an actuating unit (41) with an actuating drive (65) for the component mount (34), **characterized in that** the component mount (34) is actuated by an actuating drive (65) arranged in a drive train (57) between the spindle drive (56) and the spindle (54).

11. Method according to Claim 10, **characterized in that** the component mount (34) is actuated by an actuating drive (65) arranged at an axial distance from the component mount (34).

12. Method according to Claim 10 or 11, **characterized in that** the actuating unit (41) is controlled in an open-loop or closed-loop manner by means of a measuring unit (75) for the actuating or adjusting stroke.

13. Method according to Claim 10, 11 or 12, **characterized in that** the operating position of a clamping unit (39) of the component mount (34) is detected by means of a measuring unit (75) for the actuating or adjusting stroke.

14. Method according to one of Claims 10 to 13, **characterized in that** operating media are fed to the actuating drive (65) rotating with the spindle (54) from outside by means of a rotary feed (69) arranged between the spindle drive (56) and the machine head (13).

15. Method according to one of Claims 10 to 14, **characterized in that** the components (2, 3) to be welded are plastified at their ends facing one another by friction or by an arc impelled in a circulating manner.

## Revendications

1. Dispositif de soudage par pression avec un dispositif de plastification (7) et un dispositif d'écrasement (8), dans lequel le dispositif de soudage par pression (1) présente une tête de machine (13) avec une broche (54) et un porte-pièce (34) ainsi qu'un entraînement de broche (56) et un dispositif d'actionnement (41) avec un entraînement d'actionnement (65) pour le porte-pièce (34), **caractérisé en ce que** l'entraînement d'actionnement (65) est disposé dans une chaîne cinématique (57) entre l'entraînement de broche (56) et la broche (54).

2. Dispositif de soudage par pression selon la revendication 1, **caractérisé en ce que** l'entraînement d'actionnement (65) est disposé en rotation dans la chaîne cinématique (57), dans lequel l'entraînement d'actionnement (65) présente un boîtier d'entraînement rotatif (67), qui est relié sans rotation d'une part à l'entraînement de broche (56), en particulier à son arbre d'entraînement (59), et d'autre part à la broche (54), et transmet le couple d'entraînement.

3. Dispositif de soudage par pression selon la revendication 1 ou 2, **caractérisé en ce que** l'entraînement d'actionnement (41) présente un dispositif de mesure (75) pour la course d'actionnement.

4. Dispositif de soudage par pression selon l'une quelconque des revendications précédentes, **caractérisé en ce qu'**un élément d'actionnement (68) pour le porte-pièce (34) relié à l'entraînement d'actionnement (65) est disposé dans l'espace intérieur (55) de la broche creuse (54), dans lequel de préférence le dispositif d'actionnement (41), en particulier l'élément d'actionnement (68), est en liaison active avec un dispositif de serrage (39) du porte-pièce (34).

5. Dispositif de soudage par pression selon l'une quelconque des revendications précédentes, **caractérisé en ce que** l'entraînement d'actionnement (65) est formé par un entraînement électrique ou hydraulique.

6. Dispositif de soudage par pression selon l'une quelconque des revendications précédentes, **caractérisé en ce qu'**un élément de sortie (66) de l'entraînement d'actionnement (65) est disposé au moins en partie dans l'espace intérieur (55) de la broche creuse (54) et est formé de préférence par un agencement de piston à un étage ou plusieurs étages.

7. Dispositif de soudage par pression selon l'une quelconque des revendications précédentes, **caractérisé en ce que** le dispositif d'actionnement (41) présente une arrivée tournante (69) pour un milieu de fonctionnement, en particulier pour un liquide hydraulique ou un courant électrique, pour l'entraînement d'actionnement rotatif (65).

8. Dispositif de soudage par pression selon l'une quelconque des revendications précédentes, **caractérisé en ce que** le dispositif de soudage par pression (1) présente une tête d'écrasement (27) et la tête d'écrasement (27) et la tête de machine associée (13, 14) sont mobiles l'une par rapport à l'autre le long d'un axe de machine (6), dans lequel un porte-pièce (36) est monté entre elles de manière flottante sur le bâti de machine (12) et le dispositif de soudage par pression (1) présente un dispositif de réglage (17) de préférence automatique pour l'adaptation à différentes dimensions de pièces, notamment à différentes longueurs de pièces.

9. Dispositif de soudage par pression selon l'une quelconque des revendications précédentes, **caractérisé en ce que** le dispositif de soudage par pression (1) est formé par un dispositif de soudage par friction, dans lequel le dispositif de plastification (7) présente un dispositif de friction (9) ou le dispositif de soudage par pression (1) est formé par un dispositif de soudage avec un arc électrique déplacé magnétiquement, dans lequel le dispositif de plastification (7) présente un dispositif d'arc électrique.

10. Procédé de soudage par pression au moyen d'un dispositif de soudage par pression (1), qui présente un dispositif de plastification (7) et un dispositif d'écrasement (8) ainsi qu'une tête de machine (13) avec une broche (54) et un porte-pièce (34) ainsi qu'un entraînement de broche (56) et un dispositif d'actionnement (41) avec un entraînement d'actionnement (65) pour le porte-pièce (34), **caractérisé en ce que** l'on actionne le porte-pièce (34) au moyen d'un entraînement d'actionnement (65) disposé dans une chaîne cinématique (57) entre l'entraînement de broche (56) et la broche (54).

11. Procédé selon la revendication 10, **caractérisé en ce que** l'on actionne le porte-pièce (34) au moyen d'un entraînement d'actionnement (65) disposé à une distance axiale du porte-pièce (34).

12. Procédé selon la revendication 10 ou 11, **caractérisé en ce que** l'on commande ou on régule le dispositif d'actionnement (41) au moyen d'un dispositif de mesure (75) pour la course d'actionnement ou de réglage.

13. Procédé selon la revendication 10, 11 ou 12, **caractérisé en ce que** l'on détecte la position de fonctionnement d'un dispositif de serrage (39) du porte-pièce (34) au moyen d'un dispositif de mesure (75) pour la course d'actionnement ou de réglage.

14. Procédé selon l'une quelconque des revendications 10 à 13, **caractérisé en ce que** l'on fournit un milieu de fonctionnement à l'entraînement d'actionnement (65) tournant avec la broche (54) depuis l'extérieur au moyen d'une arrivée tournante (69) disposée entre l'entraînement de broche (56) et la structure de machine (13).

15. Procédé selon l'une quelconque des revendications 10 à 14, **caractérisé en ce que** l'on plastifie les pièces à souder (2, 3) sur leurs bords frontaux tournés l'un vers l'autre par friction ou par un arc électrique déplacé en rond.
